(19) Europäisches Patentamt European Patent Office Office européen des brevets

(11) **EP 2 854 467 B1**

(12) **FASCICULE DE BREVET EUROPEEN**

(45) Date de publication et mention de la délivrance du brevet:
**23.03.2016 Bulletin 2016/12**

(51) Int Cl.:
***H04W 74/08*** *(2009.01)*

(21) Numéro de dépôt: **14183683.3**

(22) Date de dépôt: **05.09.2014**

(54) **Système et procédé de partage de capacité distribué dans un réseau ad-hoc**

System und Verfahren zum Aufteilen der verteilten Kapazität in einem Ad-hoc-Netz

System and method for sharing distributed capacity in an ad-hoc network

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.09.2013 FR 1359228**

(43) Date de publication de la demande:
**01.04.2015 Bulletin 2015/14**

(73) Titulaire: **Green Communications**
**91400 Orsay (FR)**

(72) Inventeurs:
- **Al Agha, Khaldoun**
  **75014 Paris (FR)**
- **Cavallari, Nicolas**
  **78180 Montigny Le Bretonneux (FR)**
- **Claveirole, Thomas**
  **75013 Paris (FR)**
- **Gawedzki, Ignacy**
  **75010 Paris (FR)**

(74) Mandataire: **Hnich-Gasri, Naïma et al**
**Marks & Clerk France**
**Immeuble Visium**
**22, avenue Aristide Briand**
**94117 Arcueil Cedex (FR)**

(56) Documents cités:
**US-A1- 2004 114 521**

- **SIMON ODOU ET AL: "Admission Control Based on Dynamic Rate Constraints in Multi-Hop Networks", WIRELESS COMMUNICATIONS AND NETWORKING CONFERENCE, 2009. WCNC 2009. IEEE, IEEE, PISCATAWAY, NJ, USA, 5 avril 2009 (2009-04-05), pages 1-6, XP031454059, ISBN: 978-1-4244-2947-9**
- **GUPTA ET AL: "Sufficient rate constraints for QoS flows in ad-hoc networks", AD HOC NETWORKS, ELSEVIER, AMSTERDAM, NL, vol. 5, no. 4, 20 février 2007 (2007-02-20), pages 429-443, XP005895938, ISSN: 1570-8705, DOI: 10.1016/J.ADHOC.2006.01.003**

EP 2 854 467 B1

## Description

### Domaine de l'invention

L'invention concerne de manière générale les réseaux de télécommunication et en particulier les réseaux de télécommunication sans fil de type ad-hoc.

### Art antérieur

Les réseaux mobiles ad-hoc constituent des réseaux sans fil capables de s'organiser sans infrastructure préalablement définie. Dans un réseau ad-hoc, le médium de communication radio est partagé par les stations qui sont à portée mutuelle les unes des autres. Les stations d'un même réseau se partagent ainsi le support de transmission pour pouvoir émettre ou recevoir des paquets. Lorsque deux stations émettent en même temps sur un support de transmission, il existe un risque de collision.

Un protocole d'accès aléatoire connu appelé CSMA/CA (acronyme pour « Carrier Sense Multiple Access with Collision Avoidance » signifiant « accès multiple avec écoute de porteuse, avec évitement de collision ») peut être utilisé pour éviter de telles collisions dans le réseau. Selon cette méthode d'accès, chaque station (encore appelée « noeud » ci-après) est libre de communiquer lorsque le canal d'envoi est libre, c'est-à-dire qu'aucun signal en cours n'est détecté. Des accusés de réception (ACK) sont généralement utilisés pour déterminer si une transmission a échoué, notamment pour cause de collision. Lorsqu'une telle situation se produit, les stations patientent généralement pendant un temps aléatoire avant de recommencer à émettre, ce qui réduit la probabilité de collision.

La méthode CSMA/CA est basée sur une exclusion mutuelle qui peut être exprimée sous forme de relation de conflit entre les liens pour l'accès à une ressource commune. Lorsque le réseau ad-hoc utilise des protocoles de la famille de standards IEEE 802.11, il est supposé qu'une relation de conflit existe entre les liens reliant deux stations dès que ces liens sont suffisamment proches, au sens de la topologie. Plus précisément, il est considéré qu'une relation de conflit existe entre deux liens $(a, b)$ et $(a', b')$ si la distance minimale en nombre de sauts dans la topologie entre les paires de noeuds $\{a, a'\}$, $\{a, b'\}$, $\{b, a'\}$ et $\{b, b'\}$ est inférieure ou égale à un paramètre $N$-1 ($a, b, a'$ et $b'$ désignant des noeuds). Le paramètre $N$ représente un nombre de sauts défini par le protocole de routage et est tel que chaque noeud peut acquérir la connaissance de la topologie du réseau jusqu'à au moins $N + 1$ sauts.

La méthode d'accès aléatoire CSMA/CA permet ainsi d'éviter certaines transmissions simultanées qui risqueraient d'interférer entre elles et de limiter les retransmissions de messages. Cependant, la méthode d'accès CSMA/CA ne permet pas de distribuer équitablement la ressource commune entre les liens en conflit. Il en résulte des pénuries de ressource sur certains liens lorsque d'autres liens en conflit avec ceux-ci sont trop fortement utilisés.

Le document US2004/0114521 décrit une autre méthode d'accès à un réseau de communication. Selon D1, information concernant les périodes où les différents dispositifs seront disponibles pour recevoir des messages est échangé entre noeuds voisins, permettant aux dispositifs de connaître les moments où la communication avec un certain dispositif voisin est possible. Cependant, ledit document ne permet pas non plus de distribuer équitablement les ressources.

### Définition générale de l'invention

L'invention vient améliorer la situation. A cet effet, elle propose un système de partage de capacité dans un réseau de communication comprenant un ensemble de noeuds partageant des ressources communes, les noeuds pouvant être reliés deux à deux par des liens de communication. Selon un aspect de l'invention, chaque noeud est apte à maintenir localement au moins un ensemble de triplets $(k, l, N_{kl})$ qui à chaque lien $(k, l)$ associe une échéance $N_{kl}$ représentant la date jusqu'à laquelle le lien associé peut être considéré comme non-utilisé, tandis que les noeuds sont configurés pour échanger périodiquement selon une période $p$ prédéfinie des messages de contrôle sur un ensemble de liens, chaque message de contrôle envoyé sur un lien donné par un noeud comprenant les ensembles de triplets maintenus localement par le noeud et qui correspondent aux liens qui sont en conflit avec le lien donné.

En particulier, les ensembles maintenus localement sur chaque noeud peuvent comprendre des triplets relatifs aux liens adjacents du noeud et aux liens avec lesquels les liens adjacents sont en conflit.

Selon une caractéristique de l'invention, chaque message de contrôle envoyé par un noeud $i$ donné sur un lien $(i, j)$ peut comprendre les éléments des ensembles de triplets qui correspondent aux liens qui sont en conflit avec le lien $(i, j)$.

Selon une autre caractéristique de l'invention, chaque noeud peut être apte à mettre à jour une échéance associée à un lien donné dans l'ensemble de triplets qu'il maintient, en réponse à la réception d'un message de contrôle comportant une nouvelle valeur pour l'échéance du lien qui est postérieure à sa valeur courante.

Par ailleurs, chaque noeud peut être apte à mettre à jour les échéances associées à ses liens sortants dans l'ensemble de triplets qu'il maintient, préalablement à l'envoi d'un message de contrôle.

Dans une forme de réalisation de l'invention, pour tout lien sortant non-utilisé à la date *t* considérée, l'échéance pour ce lien peut être mise à jour à la valeur *t + Q,* où *Q* représente un intervalle de temps pendant lequel le lien sortant est à considérer comme non-utilisé par les autres noeuds.

En particulier, la période *p* d'émission de messages de contrôle sur chaque lien par un noeud donné peut être choisie de telle sorte que :

$$Q > (N+1) \times p$$

où *N* désigne la distance strictement maximale en nombre de sauts jusqu'à laquelle un noeud peut acquérir la connaissance d'un autre noeud dans la topologie du réseau.

L'échéance pour un lien donné peut être discrétisée et factorisée en *N* + 1 valeurs, le paramètre *N* désignant la distance strictement maximale en nombre de sauts jusqu'à laquelle un noeud peut acquérir la connaissance d'un autre noeud dans la topologie du réseau, chaque noeud étant apte à générer *N* + 1 ensembles discrets de triplets $E_{ij}^{n}$, , pour une valeur *n* comprise entre 0 et *N,* pour l'envoi d'un message de contrôle et à inclure lesdits *N* + 1 ensembles discrets de triplets $E_{ij}^{n}$ dans le message de contrôle avant son envoi. Les *N* + 1 ensembles discrets de triplets $E_{ij}^{n}$ peuvent être générés à partir des ensembles de triplets maintenus localement par le noeud et d'informations de topologie.

L'intervalle de discrétisation peut notamment être obtenu à partir de la durée $\Delta_n$ suivante :

$$\forall n = 0, \dots, N \; \Delta_n = \frac{n+1}{N+1} \times Q.$$

Selon une autre caractéristique de l'invention, la génération d'un message de contrôle par un noeud *i* sur un lien *(i, j)* peut comprendre, à une date *t,* pour tout lien *(i, l)* l'extension de l'échéance associé audit lien en conflit à la valeur *t + Q,* si le lien en conflit n'est pas couramment utilisé et la réduction de l'échéance associé au lien *(i, l)* à la valeur *t* si le lien est couramment utilisé.

Dans une forme de réalisation particulière de l'invention, chaque noeud peut utiliser un filtre de Bloom pour représenter les ensembles $E_{ij}^{0}, \dots, E_{ij}^{N}$ associés à un lien *(i, j)* donné, le filtre de Bloom comprenant un tableau de *m* bits et *k* fonctions de hachage pour associer chaque lien à *k* clefs, les clefs correspondant à des positions dans le tableau, tandis que le système utilise le filtre de Bloom pour déterminer avec certitude si un lien n'est pas contenu dans l'ensemble $E_{ij}^{n}$.

La réception d'un message de contrôle comprenant les ensembles $E_{ij}^{0}, \dots, E_{ij}^{N}$ sur un lien *(i, j)*, par un noeud *j,* à une date *t,* peut alors comprendre pour chaque lien *(k, l)* en conflit avec ledit lien *(i, j)* où *k* est distinct de *i* et pour toute valeur *de n* entre 0 et *N:*

- la réduction de l'échéance $N_{kl}$ du lien *(k, l)* à la valeur $t + \Delta_{n\text{-}1}$ si la distance entre le noeud *i* et le noeud *k* est strictement inférieure à la distance entre le noeud *j* et le noeud *k* en nombre de sauts, si le lien *(k, l)* est dans l'ensemble $E_{ij}^{n}$ ;

- l'extension de l'échéance $N_{kl}$ du lien *(k, l)* à la valeur $t + \Delta_n$ si le lien *(k, l)* n'est pas dans l'ensemble $E_{ij}^{n}$ .

Par ailleurs, la génération d'un message de contrôle sur un lien *(i, j)*, à une date *t,* peut comprendre pour chaque lien *(i, l)*:

- la réduction de l'échéance $N_{il}$ du lien *(i, l)* à la valeur *t* si le lien *(i, l)* est couramment utilisé ;
- l'extension de l'échéance $N_{il}$ du lien *(i, l)* à la valeur *t + Q* si le lien *(i, l)* n'est pas couramment utilisé.

La génération d'un message de contrôle sur un lien *(i, j)*, à une date *t,* peut comprendre pour chaque lien *(k, l)* en conflit avec le lien *(i, j)* tel que *l est* distinct *de j* et pour toute valeur *de n* entre 0 et *N,* l'insertion du lien *(k, l)* dans l'ensemble $E_{ij}^{n}$ , si $N_{ki}$ est strictement inférieur à $t + \Delta_n$.

L'invention propose en outre un procédé de partage de capacité dans un réseau de communication comprenant un ensemble de noeuds partageant des ressources communes, les noeuds pouvant être reliés deux à deux par des liens de communication. Le procédé comprend avantageusement les étapes consistant à :

- maintenir localement sur chaque noeud au moins un ensemble de triplets *(k, l, $N_{kl}$)* qui à chaque lien *(k, l)* associe une échéance $N_{kl}$ représentant la date jusqu'à laquelle le lien associé peut être considéré comme non-utilisé,
- envoyer périodiquement, selon une période p prédéfinie, des messages de contrôle depuis chaque noeud sur un ensemble de liens choisis, chaque message de contrôle envoyé sur un lien donné par un noeud comprenant les éléments des ensembles de triplets maintenus localement par le noeud qui correspondent aux liens qui sont en conflit avec le lien donné.

Le système et le procédé de partage de capacité distribué selon l'invention permettent ainsi de limiter le débit en amont de chaque lien. Ils permettent notamment un partage équitable de capacité en optimisant la part de ressource attribuée à chaque lien. L'amélioration du partage de la ressource commune a un impact direct sur le bon fonctionnement du réseau.

## Description des figures

D'autres caractéristiques et avantages de l'invention apparaîtront à l'aide de la description qui suit et des figures des dessins annexés dans lesquels:

- La figure 1 illustre les relations de conflit dans un exemple de topologie à six noeuds pour un paramètre *N* = 2 ;
- La figure 2A représente l'architecture d'un système distribué de partage équitable de ressources communes dans un réseau, selon certaines formes de réalisation de l'invention;
- La figure 2B représente des exemples de triplets, selon certaines formes de réalisation de l'invention ;
- La figure 3 est un organigramme décrivant le procédé d'interprétation d'un message factorisé selon une forme de réalisation de la présente invention ;
- La figure 4 montre un exemple de filtre de Bloom représentant un ensemble {*x,y,z*} ;
- La figure 5 est un organigramme décrivant le procédé de génération d'un message optimisé selon certaines formes de réalisation de l'invention; et
- La figure 6 est un organigramme représentant le procédé d'interprétation d'un message factorisé selon une autre forme de réalisation de la présente invention.

Les dessins comprennent, pour l'essentiel, des éléments qui pourront non seulement servir à mieux faire comprendre la description, mais aussi contribuer à la définition de l'invention, le cas échéant.

## Description detaillée

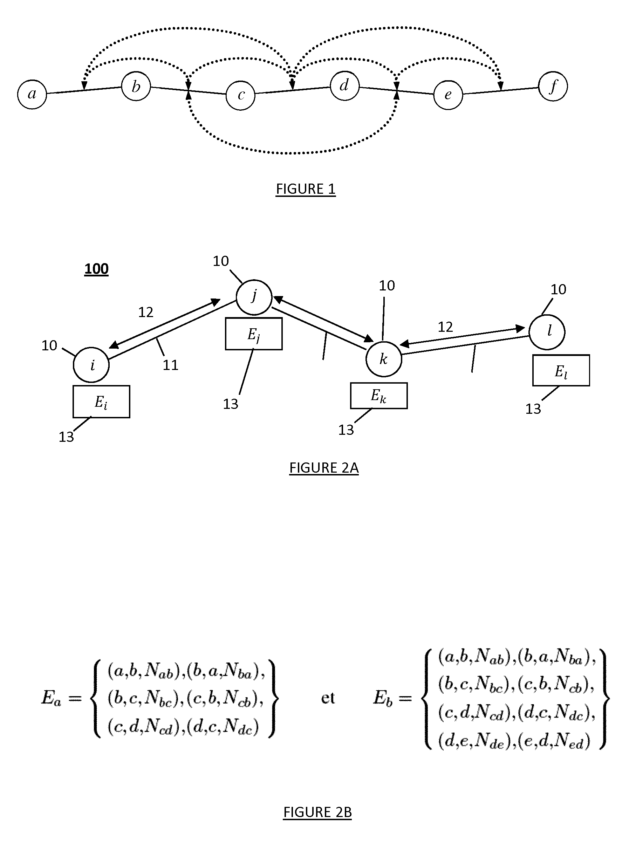

La figure 1 illustre les relations de conflit qui existent dans une topologie comprenant six noeuds (*a, b, c, d, e, f*), dans un réseau mobile de type ad-hoc où le paramètre *N* est fixé à 2. *N* désigne le nombre de sauts défini par le protocole de routage tel que chaque noeud peut acquérir la connaissance de la topologie du réseau jusqu'à au moins *N* + 1 sauts. Ainsi, dans l'exemple de la figure 1, chaque noeud peut acquérir la connaissance de la topologie du réseau jusqu'à au moins 3 sauts.

Comme représenté dans l'exemple de la figure 1, le lien (*a,b*) est en conflit avec cinq autres liens : (*b, a*), (*b, c*), (*c, b*), (*c, d*) et (*d, c*). En effet, pour chacun de ces liens, au moins une extrémité est à un saut ou à moins de un saut de distance de *a* ou de *b*. Pour les autres liens, les distances sont trop élevées. Ainsi, pour le lien (*d, e*), *d* est à 3 sauts de *a* et à 2 sauts de *b, e* est à 4 sauts de *a* et à 3 sauts de *b*, etc.

Dans les réseaux classiques utilisant un protocole de routage qui permet à chaque noeud d'acquérir la connaissance de la topologie du réseau jusqu'à au moins *N* + 1 sauts, un noeud donné peut savoir quels sont les autres liens avec lesquels chaque lien sortant est en conflit. Le noeud peut alors calculer pour chacun de ses liens sortants la part de temps maximale pendant laquelle il peut effectivement utiliser un lien sans empêcher que les liens en conflit soient utilisés pendant une part de temps égale. En effet, avec la connaissance de la topologie locale à au moins *N* + 1 sauts, un noeud peut calculer un graphe de conflit qui lui permet de connaître toutes les cliques (sous-graphes complets maximaux) auxquelles ses liens sortants appartiennent. La part de temps maximale utilisable par un lien est alors l'inverse de la taille de la plus grande clique du graphe de conflit à laquelle il appartient.

Les liens sortants pour un noeud donné désignent les liens pour lesquels le noeud donné peut limiter le débit en amont. Un noeud donné ne peut limiter en amont que les liens pour lesquels il est l'émetteur.

Dans l'exemple de la figure 1, comme le lien (*a,b*) est en conflit avec les cinq autres liens (*b, a*), (*b, c*), (*c, b*),

(*c, d*) et (*d, c*), le noeud a doit limiter l'utilisation du lien (*a, b*) à 1/6 du temps. En effet, dans l'exemple de la figure 1, tous les liens en conflit avec (*a, b*) forment une seule clique (sous-graphe complet maximal). Ainsi, la plus grande clique à laquelle le lien (*a, b*) appartient est composée de 6 liens. Par conséquent, le lien (*a, b*) ne doit pas être utilisé plus de 1/6 du temps. En considérant le lien (*b, c*), les deux cliques suivantes peuvent être observées:

{(*a, b*), (*b, a*), (*b, c*), (*c, b*), (*c, d*), (*d, c*)} et {(*b, c*), (*c, b*), (*c, d*), (*d, c*), (*d, e*), (*e, d*)}.

Ces deux cliques sont de même taille (6) de sorte que la part de temps utilisable par le lien (*b, c*) est 1/6.

Toutefois, une telle approche proactive présente l'inconvénient de réserver une part égale de ressource même lorsqu'un lien n'est pas utilisé. Ainsi, dans l'exemple de la figure 1, si seul le lien (*a,b*) est utilisé, alors 5/6 du temps sera réservé pour des liens qui n'utiliseront pas cette ressource.

L'invention améliore la situation en proposant un système de partage de capacité distribuée, s'appuyant sur une approche distribuée réactive qui permet d'informer les noeuds sur les utilisations effectives des liens et leur permettre ainsi de partager toute la ressource disponible entre les liens effectivement utilisés.

Dans la présente description, la notation suivante sera utilisée pour exprimer l'existence d'un conflit entre deux liens (*i, j*) et (*k, l*) : (*i, j*) $\oplus$ (*k, l*).

Par convention, il sera par ailleurs supposé qu'un lien est en conflit avec lui-même ((*i, j*) $\oplus$ (*i, j*)) et est en conflit avec le lien dans le sens opposé ((*i(j*) $\oplus$ (*j, i*)).

La figure 2A représente un système de partage de capacité distribué 100 selon certaines formes de réalisation de l'invention. Le système de partage 100 comprend un ensemble de noeuds 10 pouvant être reliés deux à deux par des liens 11.

Selon un aspect de l'invention, le système de partage de capacité 100 est basé sur l'échange de messages de contrôle périodiques 12 entre les noeuds 10 sur tous les liens 11, selon une période *p*.

Un tel échange est prévu pour permettre à chaque noeud i de maintenir localement un ensemble $E_i$ de triplets (*k, l, $N_{kl}$*) qui à chaque lien (*k, l*) associe une date $N_{kl}$, encore appelée « échéance » ci-après . L'échéance $N_{kl}$ pour un lien (*k, l*) donné représente la date jusqu'à laquelle le lien peut être considéré comme non-utilisé. En particulier, les échéances $N_{kl}$ peuvent représenter une date proche par rapport à la date courante. Les échéances $N_{kl}$ peuvent alors être compressées en omettant les informations sur la date courante. Plus généralement, le format choisi pour les échéances et notamment la précision du format choisi, peut dépendre du paramètre p choisi.

Chaque ensemble $E_i$ de triplets maintenu au niveau d'un noeud *i* donné comprend une entrée pour tout lien en conflit avec un lien sortant de *i*. Il peut s'agir de liens pour lesquels aucune des extrémités ne correspond au noeud *i*.

Chaque noeud *i* peut comprendre au moins une structure de données 13 pour maintenir les ensembles $E_i$. Les structures de données 13 utilisées pour maintenir les ensembles $E_i$ peuvent comprendre sans limitation des listes, des tableaux, des arbres, des tables de hachage, etc.

Dans une forme de réalisation de l'invention, l'ensemble $E_i$ pour un noeud *i* donné comprend des triplets pour l'ensemble des liens adjacents de ce noeud, ainsi que pour les liens avec lesquels les liens adjacents sont en conflit. Un lien adjacent à un noeud *i* donné correspond à un lien dont l'une des extrémités est le noeud *i*. Les liens adjacents à un noeud donné forment ainsi l'union des liens entrants et des liens sortants de ce noeud.

Par exemple, les noeuds *a* et *b* de la figure 1 comprennent respectivement les ensembles $E_a$ et $E_b$ suivants de la figure 2B.

Dans l'exemple de la figure 2B, pour le noeud *a,* les liens adjacents sont (*a, b*) et (*b, a*), les autres étant (*b, c*), (*c, b*), (*c, d*) et (*d, c*). Pour le noeud *b*, les liens adjacents sont (*a, b*), (*b, a*), (*b, c*) et (*c, b*), les autres étant (*c, d*), (*d, c*), (*d, e*) et (*e, d*).

Selon un autre aspect de l'invention, chaque message de contrôle envoyé par un noeud *i* sur un lien (*i, j*) comprend les éléments de l'ensemble $E_i$ qui correspondent aux liens qui sont en conflit avec (*i, j*). L'ensemble des éléments envoyés dans chaque message de contrôle sera noté par la suite Eij.

La notation suivante peut ainsi être utilisée pour caractériser les éléments de l'ensemble $E_{ij}$ :

$$E_{ij} = \{(k, l, N_{kl}) \in E_i : , (i, j) \oplus (k, l)\}.$$

Par hypothèse, les liens en conflit avec (*i, j*) correspondent aux liens en conflit avec (*j, i*) ((*i, j*) $\oplus$ (*j, i*)). Ainsi, en réponse à la réception d'un message de contrôle depuis un noeud *i* par un noeud *j*, le noeud *j* peut mettre à jour son ensemble $E_j$ en utilisant les informations de l'ensemble $E_{ij}$.

Ainsi, dans la suite de la description, l'ensemble $E_i$ désignera un ensemble effectivement maintenu par un noeud *i* tandis que l'ensemble $E_{ij}$ désignera un sous-ensemble de $E_i$ envoyé par *i* vers *j*. Alors qu'un ensemble $E_i$ est maintenu localement par chaque noeud *i,* les ensembles $E_{ij}$ sont générés à partir de l'ensemble $E_i$ local et d'informations de topologie locale au moment de la génération d'un message de contrôle par le noeud i.

Selon une autre caractéristique de l'invention, chaque noeud j maintenant un ensemble $E_j$ peut être configuré pour mettre à jour une échéance $N_{ab}$ correspondant à un lien (a, b) dans l'ensemble $E_{ij}$, selon des règles de mise à jour. En particulier, une règle de mise à jour des échéances peut consister à modifier une échéance $N_{ab}$ d'un lien (a, b) dans l'ensemble $E_{ij}$ lorsqu'une nouvelle valeur est reçue pour cette échéance dans un message de contrôle envoyé par le noeud i et que la nouvelle valeur est postérieure à la valeur courante de l'échéance dans l'ensemble $E_j$.

Par ailleurs, préalablement à l'envoi d'un message de contrôle, un noeud i donné peut être configuré pour mettre à jour les échéances de ses liens sortants dans l'ensemble $E_i$. En particulier, pour tout lien (i, k) non-utilisé à l'instant t considéré, l'échéance $N_{ik}$ est fixée à la valeur t + Q, où Q représente un intervalle de temps pendant lequel le lien (i, k) est à considérer comme non-utilisé par les autres noeuds (indépendamment de la valeur de l'échéance $N_{ik}$ à l'instant t où elle est mise à jour de façon à refléter l'utilisation effective du lien (i, k)).

Selon un autre aspect de l'invention, la période p d'émission des messages de contrôle sur chaque lien par un noeud donné peut être choisie de telle sorte que :

$$Q > (N + 1) \times p.$$

Dans une forme de réalisation préférée de l'invention, les paramètres Q (intervalle de temps pendant lequel le lien (i, k) est à considérer comme non-utilisé par les autres noeuds) et p (période p d'émission des messages de contrôle sur chaque lien par un noeud donné) sont les mêmes pour tous les noeuds du réseau.

Selon un caractéristique particulière de l'invention, les messages de contrôle 12 sont envoyés périodiquement sur tous les liens sortants. Cependant, les instants d'envoi des messages de contrôle peuvent être désynchronisés entre les liens.

Le format des messages de contrôle est choisi de sorte que le noeud récepteur du message puisse déterminer quel est le noeud émetteur de façon à savoir sur quel lien il a été transmis. Pour cela, chaque message de contrôle peut utiliser les adresses source et destination du paquet contenant le message.

Les messages de contrôle 12 peuvent en outre comprendre d'autres informations. Il est également possible d'utiliser des messages existants ayant une fréquence d'émission adaptée en tant que messages de contrôle 12 pour véhiculer l'information sur les échéances.

Les messages de contrôle 12 peuvent être envoyés en unicast. Des mécanismes d'accusé de réception et de retransmissions peuvent être utilisés lorsque les messages de contrôle n'ont pas été reçus. Ces mécanismes peuvent notamment être choisis pour augmenter la probabilité de succès de la transmission pour une meilleure diffusion de l'information.

L'invention permet ainsi d'éviter qu'une échéance récemment mise à jour par un noeud i lors de l'émission d'un message de contrôle sur un lien (i, j) puisse expirer en un noeud plus éloigné, entre deux réceptions de message de contrôle, si le lien concerné par cette échéance est continuellement non-utilisé. Comme les conflits sont définis à N sauts, un noeud intéressé par une telle échéance est éloigné d'au plus N + 1 sauts. Dans un cas extrême, une échéance mise à jour par le noeud i à l'instant t arrivera à l'instant $t + (N + 1) \times p$ à un noeud éloigné du noeud i de N + 1 sauts.

Le paramètre p est de préférence défini globalement pour tout le système 100. Les noeuds sont alors configurés avant le démarrage du système pour appliquer la période p définie par le système. Dans les situations où les transmissions des messages de contrôle sont considérées comme peu fiables, le système 100 peut diminuer d'autant la période p pour éviter une expiration prématurée des échéances.

L'homme du métier appréciera que les échéances portent sur les non-utilisations des liens et non sur l'utilisation de liens. Par suite, le système de partage des ressources 100 selon les formes de réalisation de l'invention est plus robuste contre les pertes intempestives de messages. Une échéance qui expire de façon prématurée peut avoir pour conséquence qu'un noeud considère à tort un lien comme utilisé et attribue par suite une plus faible part de temps à ses liens sortants. Une expiration prématurée correspond à l'expiration d'une échéance $N_{ij}$ de non-utilisation d'un lien (i, j) au niveau de l'ensemble $E_k$ d'un noeud k en conflit avec (i, j) alors que le lien (i, j) reste non-utilisé. Ceci peut arriver par exemple si l'information n'est pas diffusée suffisamment vite vers k, pour une raison particulière (retard dans le traitement ou l'émission des messages, pertes de messages, etc). Cependant, une expiration prématurée ne provoque pas une sur-utilisation de la ressource commune.

Dans un réseau du type de celui représenté sur la figure 2, le volume de données à transmettre dans chaque message de contrôle peut croître généralement très vite en fonction du nombre de liens en conflit.

Par ailleurs, l'utilisation de dates absolues pour l'échéance peut nécessiter une synchronisation des horloges de tous les noeuds, ce qui peut s'avérer relativement complexe dans un réseau ad-hoc. Pour cela, il est possible par exemple d'utiliser une source d'horloge commune à tous les noeuds (e.g. récepteur GPS (acronyme pour Global Positioning System)) ou un protocole de synchronisation tel que le protocole de synchronisation NTP (acronyme pour Network Time Protocol).

Pour surmonter ces inconvénients, dans une forme particulière de réalisation de l'invention, le système de partage de capacité distribué 100 peut être configuré pour discrétiser et factoriser les échéances en $N + 1$ valeurs.

Dans la suite de la description, les durées suivantes définies en fonction de $n$, $N$ et $Q$ seront utilisées pour discrétiser et factoriser les échéances, à titre d'exemple non limitatif:

$$\Delta_{-1} = 0$$

$$\forall n = 0, ..., N \quad \Delta_n = \frac{n + 1}{N + 1} \times Q$$

Ces durées seront utilisées avec l'instant courant t pour définir des intervalles de temps dans le futur.

En outre, dans cette forme de réalisation, les ensembles Eij sont remplacés par N + 1 ensembles discrets $E_{ij}^n$ qui sont définis tels que :

$$\begin{cases} E_{ij}^0 = \{(k, l): (k, l, N_{kl}) \in E_{ij} \wedge N_{kl} < t + \Delta_0\} \\ E_{ij}^n = \{(k, l): (k, l, N_{kl}) \in E_{ij} \wedge t + \Delta_{n-1} \leq N_{kl} < t + \Delta_n\} \forall n = 1, ..., N \end{cases} .$$

L'information sur l'utilisation effective des liens est ainsi encodée dans les ensembles discrets.

Un message de contrôle (désignés par la suite « message de contrôle factorisé ») envoyé sur un lien comprend ainsi les ($N + 1$) ensembles discrets $E_{ij}^0, ..., E_{ij}^N$ (chaque ensemble $E_{ij}^n$ contenant des liens en conflit avec ($i, j$)) au lieu de tout l'ensemble $E_{ij}$. En réponse à la réception d'un message de contrôle factorisé, un noeud $j$ peut mettre en oeuvre un procédé d'interprétation du message factorisé, selon certaines formes de réalisation de l'invention.

En utilisant ainsi des ensembles factorisés, les échéances peuvent être implicites. Les messages ne comprennent alors plus de date absolue et il n'est plus nécessaire d'avoir une référence commune dans le temps. De plus, avec l'utilisation d'intervalles de temps dans le futur au lieu de dates absolues, la synchronisation d'horloge n'est plus nécessaire.

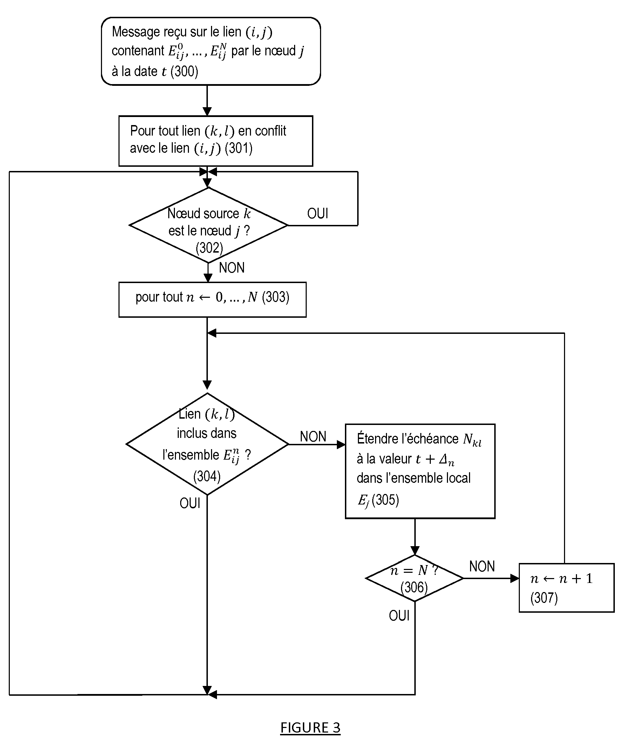

La figure 3 est un organigramme illustrant le procédé d'interprétation d'un message de contrôle factorisé par un noeud courant $j$, en réponse à la réception d'un message reçu sur le lien ($i, j$) comprenant des ensembles $E_{ij}^0, ..., E_{ij}^N$, à une date courante $t$ (300).

Pour tout lien ($k, l$) en conflit avec le lien ($i, j$) (étape 301), il est tout d'abord déterminé si la source $k$ n'est pas le noeud courant $j$, à l'étape 302, à partir d'informations de topologie maintenus localement par le noeud $j$.

Si la source $k$ est distincte du noeud courant $j$, pour chaque valeur de l'indice $n$ allant de 0 à $N$ (étape 303), les étapes 304 à 306 sont réalisées.

Plus précisément, à l'étape 304, il est déterminé si le lien ($k, l$) n'est pas inclus dans l'ensemble $E_{ij}^n$. Pour cela, les ensembles $E_{ij}^n$ sont parcourus selon un ordre croissant des indices $n$. Tant que le lien lien ($k, l$) n'est pas trouvé dans l'ensemble $E_{ij}^n$, il peut être considéré que l'échéance $N_{kl}$ satisfait: $N_{kl} \geq + \Delta_n$. Si le lien ($k, l$) n'est pas inclus dans l'ensemble $E_{ij}^n$, à l'étape 305, l'échéance $N_{kl}$ du lien ($k, l$) est étendue à $t + \Delta_n$. L'échéance de $N_{kl}$ est étendue à la valeur $t + \Delta_n$ seulement si la valeur courante de $N_{kl}$ est plus petite que cette valeur. La mise à jour de l'échéance est faite dans l'ensemble $E_j$ local au noeud $j$. L'étape d'extension de l'échéance permet de ne pas réduire une valeur plus grande avec une information qui a mis plus de temps à arriver qu'une information antérieure plus fraîche. Par exemple, en considérant trois noeuds $a, b, c$, en triangle et en supposant que :

- a reçoit d'abord un message de $c$ qui lui indique que le lien ($c, b$) est inutilisé jusqu'à une date $t_1$,
- a reçoit ensuite un message de $b$ qui lui indique que le lien ($c, b$) est inutilisé jusqu'à une date $t_2$, telle que $t_2 < t_1$,

l'échéance pour ($c, b$) ne sera mise à jour qu'à la réception du premier message.

Si le lien (k, l) est déjà inclus dans l'ensemble $E_{ij}^n$ (304), le lien suivant est traité sans considérer les ensembles pour les indices *n* suivants. Plus précisément, à l'étape 306, *si n* est différent de *N, n* est incrémenté à l'étape 307 et l'ensemble suivant $E_{ij}^{n+1}$ est traité en selon les étapes 304 et 305. Sinon *si n = N,* un nouveau lien *(k, l)* en conflit avec *(i, j)* est traité en itérant l'étape 301, si tous les liens n'ont pas tous encore été traités. Si tous les liens (k, l) en conflit avec (i, j) ont été traité, le procédé est terminé.

De même, s'il est déterminé à l'étape 304 que le lien (k, l) est inclus dans l'ensemble $E_{ij}^n$, un nouveau lien (k, j) en conflit avec (i, j) est traité s'ils n'ont pas tous encore été traités et si tous les liens *(k, l)* en conflit avec (i, j) ont déjà été traités, le procédé est terminé.

Le volume d'information contenu dans un message de contrôle peut dépendre du nombre de liens en conflit avec le lien sur lequel le message est envoyé. Selon une caractéristique particulière de l'invention, il est alors possible d'affecter une taille fixe aux messages de contrôle en utilisant des structures de données particulières.

Dans un mode de réalisation de l'invention, des filtres de Bloom peuvent être utilisés pour représenter les ensembles $E_{ij}^n$ et tester la présence des liens dans les ensembles $E_{ij}^n$. Un filtre de Bloom est une représentation probabiliste d'un ensemble. Chaque noeud *i* maintient ainsi l'ensemble $E_i$ et représente les ensembles $E_{ij}^n$ par des filtres de Bloom. Lorsqu'un noeud *j* reçoit un message, il peut savoir quels sont les liens qui sont contenus dans l'ensemble $E_{ij}$ (les mêmes que ceux de $E_{ji}$) et peut tester leur présence dans les ensembles $E_{ij}^n$ représentés par des filtres de Bloom dans le message.

L'utilisation des filtres de Bloom pour représenter les ensembles $E_{ij}^n$ permet notamment d'utiliser des messages de contrôle de taille fixe.

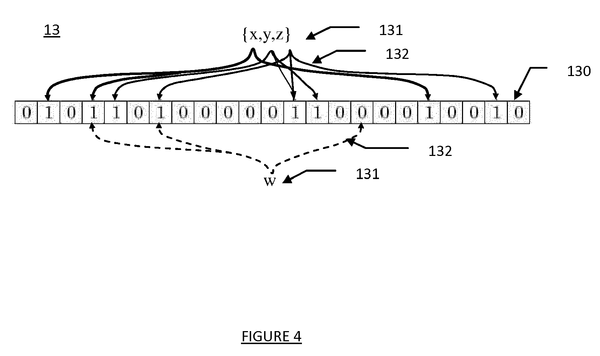

La figure 4 représente un exemple de filtre de Bloom 13. Comme représenté sur la figure 4, un filtre de Bloom est une structure de donnée probabiliste compacte qui permet de savoir avec certitude qu'un élément n'est pas présent dans un ensemble (absence de « faux négatifs ») et de déterminer avec une certaine probabilité qu'il y est présent (possibilité de « faux positifs »). Cette structure peut notamment être utilisée à l'étape 304 de la figure 3 pour déterminer avec certitude si le lien *(k, l)* n'est pas inclus dans l'ensemble $E_{ij}^n$. .

Un filtre de Bloom peut être mis en oeuvre en utilisant un tableau de bits 130 de taille m et *k* fonctions de hachage $H_0$, $H_1$,...,$H_{k-1}$ des éléments de l'ensemble considéré. L'ensemble des fonctions de hachage permettent d'associer, à chaque élément de l'ensemble, un ensemble de clefs correspondant à des positions dans le tableau 130.

L'exemple de la figure 4 est un exemple simplifié illustrant les caractéristiques d'un filtre de Bloom. Le filtre de Bloom représenté est associé aux éléments 131 comprenant un ensemble {x, y, z} ainsi qu'un élément w. Les flèches 132 indiquent les positions dans le tableau 130 auxquelles les éléments 131 (x, y, z et w) sont associés par les trois fonctions de hachage.

Pour construire un filtre de Bloom, le tableau est tout d'abord initialisé à 0 puis chaque élément de l'ensemble est initialisé en mettant à 1 les cases du tableau dont l'indice est une clef modulo *m*. Pour tester l'appartenance d'un élément du tableau à l'ensemble, ses clefs sont tout d'abord calculées en utilisant les fonctions de hachage. Ensuite, pour chacune des clefs calculées, il est déterminé si le bit correspondant dans le tableau est à 1. Si au moins un de ces bits est à 0, il peut être déduit avec certitude que l'élément n'est pas contenu dans l'ensemble représenté. Cependant, si tous ces bits sont à 1, il est probable que l'élément est effectivement contenu dans l'ensemble, sans pour autant que cela soit établi avec certitude.

Dans l'exemple de la figure 4, la taille du tableau est *m* = 23 et 3 fonctions de hachage sont utilisées (*k* = 3). Il peut être déterminé à partir du tableau que les éléments *x, y* et *z* sont probablement présent et de manière certaine que l'élément *w* n'est pas présent dans l'ensemble car une des positions associées contient 0.

Chaque ensemble $E_{ij}^n$ peut ainsi être représenté par un filtre de Bloom et occuper par conséquent une taille fixe dans le message de contrôle. La présence d'un lien dans l'ensemble $E_{ij}^n$ signifie que sa non-utilisation ne doit pas dépasser la date $t + \Delta_{n-1}$. Ainsi, il peut être considéré que le lien sera utilisé à partir de la date $t + \Delta_{n-1}$. Un « faux positif » dans l'ensemble fera que *j* considèrera comme « utilisé » un lien qui dans les faits est « non-utilisé ». Cependant, un lien « utilisé » ne sera pas considéré comme « non-utilisé », ce qui garantit que les ressources disponibles ne seront jamais sur-utilisées.

Les liens (k, l) sont connus d'un noeud j par sa propre connaissance de la topologie et les échéances $N_{kl}$

peuvent être déduites de la présence ou non des liens dans les ensembles $E_{ij}^n$ représentés par des filtres de Bloom, ce qui permet d'accéder aux triplets (k, l, $N_{kl}$).

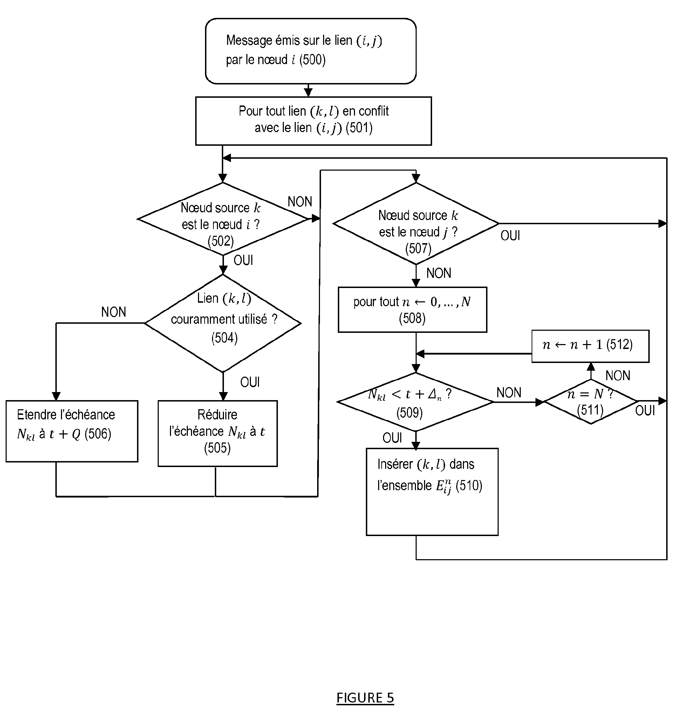

La figure 5 est un organigramme représentant le procédé de génération d'un message de contrôle optimisé par un noeud courant *i,* pour un lien (*i, j*) sur lequel un message de contrôle est émis (500), selon certaines formes de réalisation de l'invention.

Pour tout lien *(k, l)* en conflit avec le lien (*i, j*) (étape 501), il est déterminé si la source *k* correspond au noeud courant *i* à l'étape 502.

Si la source *k* correspond au noeud courant *i,* il est ensuite déterminé si le lien *(k, l)* est couramment utilisé à l'étape 504. L'étape 504 peut être mise en oeuvre de différentes manières en fonction de l'application de l'invention. Par exemple, il peut être déterminé si le lien *(k, l)* est couramment utilisé en vérifiant qu'au moins un paquet de données utilisateur a été transmis durant la dernière seconde ou tout autre durée fournie par le système en paramètre.

Si le lien *(k, l)* est couramment utilisé, à l'étape 505, l'échéance $N_{kl}$ de *(k, l)* est réduite à *t*. Sinon, l'échéance $N_{kl}$ de *(k, l)* est étendue à *t* + *Q* à l'étape 506.

A l'étape 507, il est déterminé si la source *k* est le noeud destinataire *j*. Si ce n'est pas le cas, pour toute valeur de *l'indice n* allant de 0 à *N* (508), les étapes 509 et 510 sont réalisées.

Plus précisément, à l'étape 509, il est déterminé si l'échéance $N_{kl}$ du lien *(k, l)* est inférieure à $t + \Delta_n$.

Si l'échéance $N_{kl}$ est inférieure à $t + \Delta_n$, à l'étape 510, le lien *(k, l)* est inséré dans l'ensemble $E_{ij}^n$.

Si l'échéance $N_{kl}$ est supérieure ou égale à $t + \Delta_n$ (509), les étapes 509 et 510 sont réitérées pour une nouvelle valeur de *n* (étapes 511 et 512) *si n* est différent de *N*. Si *n* est égal à *N,* ou en réponse à l'insertion d'un lien dans l'ensemble $E_{ij}^n$ (510), un autre lien en conflit avec le lien (*i, j*) est traité à l'étape 501. Lorsque tous les liens en conflit ont été traités, le procédé est terminé.

La source du message réduit ainsi l'échéance d'un lien sortant si celui-ci est actuellement utilisé (à l'étape 505). Ce procédé de génération de message de contrôle optimisé permet aux noeuds qui reçoivent les messages de réduire une échéance, sous certaines conditions, afin de diffuser plus rapidement l'information sur l'utilisation des liens.

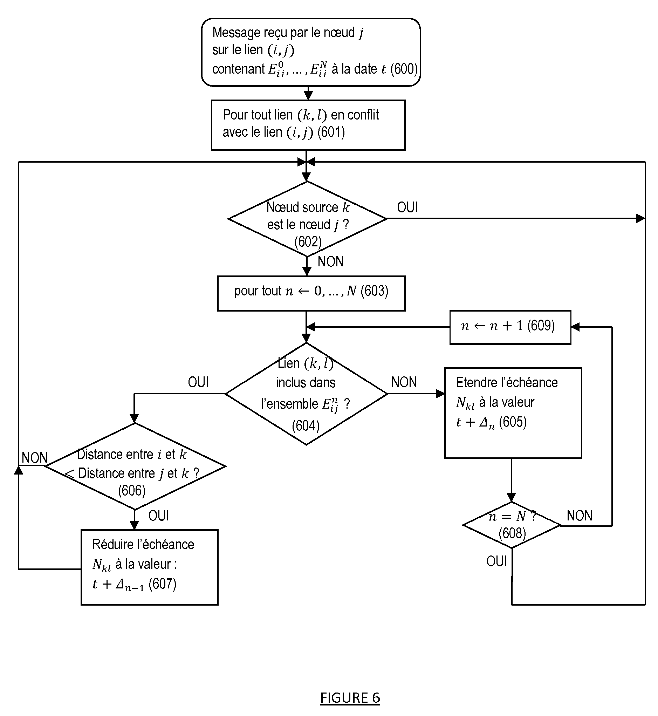

La figure 6 est un organigramme illustrant l'interprétation d'un tel message optimisé, selon une forme de réalisation préférée de l'invention, par un noeud courant *j,* en réponse à un message reçu sur le lien (*i, j*), pour des ensembles $E_{ij}^0, ..., E_{ij}^N$ contenus dans le message, à la date courante *t* (600). L'organigramme de la figure 6 constitue une extension du procédé d'interprétation de la figure 3.

Pour tout lien (*k, l*) en conflit avec le lien (*i, j*) (601), il est déterminé si la source *k* est le noeud courant à l'étape 602.

Si la source *k* n'est pas le noeud courant, l'étape 604 est réalisée pour toute valeur de l'indice *n* entre 0 et *N* (603).

Plus précisément, à l'étape 604, il est déterminé si le lien *(k, l)* n'est pas compris dans l'ensemble $E_{ij}^n$. Si le lien *(k, l)* n'est pas compris dans l'ensemble $E_{ij}^n$, l'échéance de *(k, l)* est étendue à $t + \Delta_n$ à l'étape 605.

Sinon, si le lien *(k, l)* est compris dans l'ensemble $E_{ij}^n$, il est déterminé si la distance entre *i* et *k* est strictement inférieure à la distance entre *j* et *k* (distance en nombre de sauts), à l'étape 606.

Si la distance entre *i* et *k* est strictement inférieure à la distance entre *j* et *k,* l'échéance de (*k, l*) est réduite à *t* + $\Delta_{n-1}$ à l'étape 607. Ainsi, si le noeud *i* est plus proche de la source du lien (*k, l*) que *j,* alors il est très probable que l'information diffusée par *i* est plus « fraîche » que celle déjà connue de *j*. C'est pourquoi *j* peut alors réduire l'échéance de (*k, l*). Il est par suite possible de diffuser efficacement l'information sur l'utilisation des liens. En effet, quand un lien commence à être utilisé, il est inutile d'attendre que son échéance expire au niveau des autres noeuds pour recouvrer la part de ressource qu'il est souhaité de lui attribuer, dans la mesure où les noeuds réagissent plus vite à ce changement.

Si la distance entre *i* et *k* est supérieure ou égale à la distance entre *j* et *k,* ou en réponse à la mise à jour de l'échéance $N_{kl}$ (607), un autre lien (*k, l*) en conflit avec (*i, j*) est traité à l'étape 601. Lorsque tous les liens ont été traités, le procédé est terminé.

En réponse à l'extension de l'échéance de (*k, l*) (605), *si n* est différent de *N, n* est incrémenté à l'étape 608 et l'ensemble suivant $E_{ij}^{n+1}$ est traité a l'étape 604. Sinon si *n* = *N,* un nouveau lien (*k, l*) en conflit avec (*i, j*) est traité en itérant l'étape 601, si tous les liens n'ont pas tous encore été traités. Si tous les liens (*k, l*) en conflit avec (*i, j*) ont été traités, le procédé est terminé.

Le système de partage 100 peut en complément utiliser un protocole de découverte de la topologie locale pour permettre aux noeuds de générer les ensembles $E_{ij}^n$ au moment de la génération d'un message de contrôle 12. Le protocole de découverte peut faire partie du protocole de routage utilisé, comme dans le cas par exemple du protocole de routage OLSR (acronyme pour « Optimized Link State Routing ») destiné aux réseaux maillés, sans fil ou mobiles.

L'utilisation des échéances, selon les modes de réalisation décrits de l'invention, permet par conséquent de savoir à tout moment, quels sont les liens à considérer comme utilisés. Lorsque la part de ressource utilisable est mise à jour par un lien sortant, le système 100 peut déterminer quel est le nombre maximum de liens utilisés dans les cliques du graphe de conflit contenant le lien sortant en question.

L'invention permet ainsi de diffuser l'information sur l'utilisation effective des liens dans le réseau à destination des noeuds potentiellement concernés.

Il en résulte une distribution équitable de la ressource commune entre les liens en conflit, ce qui permet de limiter les pénuries de ressource sur certains liens lorsque d'autres liens en conflit avec ceux-ci sont trop fortement utilisés.

L'invention n'est pas limitée aux modes de réalisation décrits ci-avant à titre d'exemple non limitatif. Elle englobe toutes les variantes de réalisation qui pourront être envisagées par l'homme du métier. En particulier, bien que l'invention présente un intérêt particulier pour les réseaux ad-hoc, elle n'est pas limitée à de tels réseaux de communication et peut s'appliquer à d'autres types de réseaux de communication dans lesquels les ressources des liens sont communes. L'invention n'est pas non plus limitée à des ressources communes particulières. Par exemple, la ressource commune partagée entre les noeuds peut être la capacité (débit maximal en bits-par-seconde), ou tout autre type de ressources partagées entre plusieurs liens voisins.

L'homme du métier comprendra que le système de partage de capacité distribué selon les formes de réalisation de l'invention ainsi que ses sous-composants peuvent être mis en oeuvre de diverses façons par matériel (« hardware »), logiciel, ou une combinaison de matériel et de logiciels.

En particulier, les éléments du système de partage de capacité peuvent être combinés ou séparés en sous-éléments pour mettre en oeuvre l'invention. En outre, ils peuvent être mis en oeuvre sous la forme de programmes d'ordinateur exécutés par un processeur. Un programme d'ordinateur est un ensemble d'instructions qui peuvent être utilisées, directement ou indirectement, par un ordinateur.

Un programme d'ordinateur peut être écrit dans n'importe quel langage de programmation, y compris les langages compilés ou interprétés et il peut être déployé sous n'importe quelle forme dans l'environnement informatique choisi.

**Revendications**

1. Système de partage de capacité (100) dans un réseau de communication comprenant un ensemble de noeuds (10) partageant des ressources communes, les noeuds pouvant être reliés deux à deux par des liens (11) de communication, **caractérisé en ce que** chaque noeud est apte à maintenir localement au moins un ensemble de triplets $(k, l, N_{kl})$ qui à chaque lien $(k,l)$ associe une échéance $N_{kl}$ représentant la date jusqu'à laquelle le lien associé peut être considéré comme non-utilisé et **en ce que** les noeuds sont configurés pour échanger périodiquement, selon une période $p$ prédéfinie, des messages de contrôle sur un ensemble de liens, chaque message de contrôle envoyé sur un lien donné par un noeud comprenant les ensembles de triplets maintenus localement par ledit noeud et qui correspondent aux liens qui sont en conflit avec ledit lien donné.

2. Système de partage selon la revendication 1, **caractérisé en ce que** les ensembles maintenus localement sur chaque noeud comprennent des triplets relatifs aux liens adjacents du noeud et aux liens avec lesquels les liens adjacents sont en conflit.

3. Système de partage de capacité selon la revendication 2, **caractérisé en ce que** chaque message de contrôle envoyé par un noeud $i$ donné sur un lien $(i, j)$ comprend les éléments des ensembles de triplets qui correspondent aux liens qui sont en conflit avec le lien $(i, j)$.

4. Système de partage de capacité selon l'une des revendications précédentes, **caractérisé en ce que** chaque noeud est apte à mettre à jour une échéance associée à un lien donné dans l'ensemble de triplets qu'il maintient, en réponse à la réception d'un message de contrôle comportant une nouvelle valeur pour l'échéance dudit lien qui est postérieure à sa valeur courante.

5. Système de partage de capacité selon l'une des revendications précédentes, **caractérisé en ce que** chaque noeud est apte à mettre à jour les échéances associées à ses liens sortants dans l'ensemble de triplets qu'il maintient, préalablement à l'envoi d'un message de contrôle.

6. Système de partage de capacité selon la revendication 5, **caractérisé en ce que** pour tout lien sortant non-utilisé à la date $t$ considérée, l'échéance pour ce lien est mise à jour à la valeur $t + Q$, où $Q$ représente un intervalle de temps pendant lequel le lien sortant est à considérer comme non-utilisé par les autres noeuds.

7. Système de partage de capacité selon la revendication 6, **caractérisé en ce que** la période $p$ d'émission de messages de contrôle sur chaque lien par un noeud donné est choisie de telle sorte que :

$$Q > (N + 1) \times p$$

où $N + 1$ désigne la distance strictement maximale en nombre de sauts jusqu'à laquelle un noeud peut acquérir la connaissance d'un autre noeud dans la topologie du réseau

8. Système de partage de capacité selon la revendication 1, **caractérisé en ce que** l'échéance pour un lien donné est discrétisée et factorisée en $N + 1$ valeurs, le paramètre $N + 1$ désignant la distance strictement maximale en nombre de sauts jusqu'à laquelle un noeud peut acquérir la connaissance d'un autre noeud dans la topologie du réseau et **en ce que** chaque noeud est apte à générer $N + 1$ ensembles discrets de triplets $E_{ij}^n$, pour une valeur $n$ comprise entre 0 et $N$, pour l'envoi d'un message de contrôle et à inclure lesdits $N + 1$ ensembles discrets de triplets $E_{ij}^n$ dans le message de contrôle avant son envoi, lesdits $N + 1$ ensembles discrets de triplets $E_{ij}^n$ étant générés à partir des ensembles de triplets maintenus localement par le noeud et d'informations de topologie.

9. Système de partage de capacité selon la revendication 8, **caractérisé en ce que** l'intervalle de discrétisation est obtenu à partir de la durée $\Delta_n$ suivante :

$$\forall n = 0, \dots, N \; \Delta_n = \frac{n+1}{N+1} \times Q \; .$$

10. Système de partage de capacité selon l'une de revendications 8 et 9, **caractérisé en ce que** la génération d'un message de contrôle par un noeud $i$ sur un lien $(i, j)$ comprend, à une date $t$, pour tout lien $(i, l)$ l'extension de l'échéance associé audit lien en conflit à la valeur $t + Q$, si le lien en conflit n'est pas couramment utilisé et la réduction de l'échéance associé au lien $(i, l)$ à la valeur $t$ si le lien est couramment utilisé.

11. Système de partage de capacité selon l'une des revendications 8 et 9, **caractérisé en ce que** chaque noeud utilise un filtre de Bloom pour représenter les ensembles $E_{ij}^0, \dots, E_{ij}^N$ associés à un lien $(i, j)$ donné, le filtre de Bloom comprenant un tableau de m bits et k fonctions de hachage pour associer chaque lien à k clefs, les clefs correspondant à des positions dans le tableau et **en ce que** le système utilise le filtre de Bloom pour déterminer avec certitude si un lien n'est pas contenu dans l'ensemble $E_{ij}^n$.

12. Système de partage de capacité selon la revendication 11, **caractérisé en ce que** la réception d'un message de contrôle comprenant les ensembles $E_{ij}^0, \dots, E_{ij}^N$ sur un lien $(i, j)$, par un noeud $j$, à une date $t$, comprend pour chaque lien $(k, l)$ en conflit avec ledit lien $(i, j)$ où $k$ est distinct de $i$ et pour toute valeur de $n$ entre 0 et $N$ :

   - la réduction de l'échéance $N_{kl}$ du lien $(k, l)$ à la valeur $t + \Delta_{n-1}$ si la distance entre le noeud $i$ et le noeud $k$ est strictement inférieure à la distance entre le noeud $j$ et le noeud $k$ en nombre de sauts, si le lien $(k, l)$ est dans l'ensemble $E_{ij}^n$ (604) ;

   - l'extension de l'échéance $N_{kl}$ du lien $(k, l)$ à la valeur $t + \Delta_n$ (605) si le lien $(k, l)$ n'est pas dans l'ensemble $E_{ij}^n$ (604).

13. Système de partage de capacité selon l'une des revendications 11 et 12, **caractérisé en ce que** la génération d'un message de contrôle sur un lien $(i, j)$, à une date $t$, comprend pour chaque lien $(i, l)$ :

   - la réduction de l'échéance $N_{il}$ du lien $(i, l)$ à la valeur $t$ si le lien $(i, l)$ est couramment utilisé ;
   - l'extension de l'échéance $N_{il}$ du lien $(i, l)$ à la valeur $t + Q$ (506) si le lien $(i, l)$ n'est pas couramment utilisé.

**14.** Système de partage de capacité selon l'une des revendications 11 à 13, **caractérisé en ce que** la génération d'un message de contrôle sur un lien $(i, j)$, à une date $t$, comprend pour chaque lien $(k, l)$ en conflit avec le lien $(i, j)$, tel que $l$ est distinct de $j$ et pour toute valeur de $n$ entre 0 et $N$, l'insertion du lien $(k, l)$ dans l'ensemble $E_{ij}^n$ (510), si $N_{kl}$ est strictement inférieur à $t + \Delta_n$.

**15.** Procédé de partage de capacité dans un réseau de communication comprenant un ensemble de noeuds (10) partageant des ressources communes, les noeuds pouvant être reliés deux à deux par des liens (11) de communication, **caractérisé en ce qu'**il comprend les étapes consistant à :

- maintenir localement sur chaque noeud au moins un ensemble de triplets $(k, l, N_{kl})$ qui à chaque lien $(k, l)$ associe une échéance $N_{kl}$ représentant la date jusqu'à laquelle le lien associé peut être considéré comme non-utilisé,
- envoyer périodiquement, selon un période p prédéfinie, des messages de contrôle depuis chaque noeud sur un ensemble de liens choisis, chaque message de contrôle envoyé sur un lien donné par un noeud comprenant les éléments des ensembles de triplets maintenus localement par le noeud et qui correspondent aux liens qui sont en conflit avec ledit lien donné.

**Patentansprüche**

**1.** System (100) zum Aufteilen von Kapazität in einem Kommunikationsnetz, umfassend einen Satz von Knoten (10), die sich gemeinsame Ressourcen teilen, wobei die Knoten paarweise durch Kommunikationslinks (11) verbunden werden können, **dadurch gekennzeichnet, dass** jeder Knoten lokal wenigstens einen Satz von Tripletts $(k, l, N_{kl})$ beibehalten kann, der mit jedem Link $(k, l)$ eine Ablauffrist $N_{kl}$ assoziiert, die die Zeit repräsentiert, bis zu der der assoziierte Link als unbenutzt angesehen werden kann, und dadurch, dass die Knoten zum periodischen Austauschen, gemäß einer vordefinierten Periode p, von Steuernachrichten über einen Satz von Links konfiguriert sind, wobei jede über einen gegebenen Link von einem Knoten gesendete Steuernachlicht die Sätze von Tripletts umfasst, die lokal von dem Knoten beibehalten werden und die den Links entsprechen, die mit dem gegebenen Link im Konflikt stehen.

**2.** Kapazitätsteilungssystem nach Anspruch 1, **dadurch gekennzeichnet, dass** die lokal auf jedem Knoten beibehaltenen Sätze Tripletts umfassen, die mit den Links neben dem Knoten und den Links in Verbindung stehen, mit denen die benachbarten Links im Konflikt stehen.

**3.** Kapazitätsteilungssystem nach Anspruch 2, **dadurch gekennzeichnet, dass** jede von einem gegebenen Knoten $i$ über einen Link $(i, j)$ gesendete Steuernachricht die Elemente der Sätze von Tripletts umfasst, die den Links entsprechen, die mit dem Link $(i, j)$ im Konflikt stehen.

**4.** Kapazitätsteilungssystem nach einem der vorherigen Ansprüche, **dadurch gekennzeichnet, dass** jeder Knoten eine Ablauffrist in Verbindung mit einem gegebenen Link in dem darin beibehaltenen Satz von Tripletts aktualisieren kann, als Reaktion auf den Empfang einer Steuernachricht, die einen neuen Wert für die Ablauffrist des Links umfasst, der später ist als ihr aktueller Wert.

**5.** Kapazitätsteilungssystem nach einem der vorherigen Ansprüche, **dadurch gekennzeichnet, dass** jeder Knoten die Ablauffristen in Verbindung mit seinen abgehenden Links in dem darin gehaltenen Satz von Tripletts vor der Übertragung einer Steuernachricht aktualisieren kann.

**6.** Kapazitätsteilungssystem nach Anspruch 5, **dadurch gekennzeichnet, dass** für jeden abgehenden Link, der nicht zu der betrachteten Zeit $t$ benutzt wird, die Ablauffrist für diesen Link auf den Wert $t + Q$ aktualisiert wird, wobei $Q$ ein Zeitintervall repräsentiert, während dem der abgehende Link als von den anderen Knoten nicht benutzt anzusehen ist.

**7.** Kapazitätsteilungssystem nach Anspruch 6, **dadurch gekennzeichnet, dass** die Periode $p$ zum Übertragen von Steuernachlichten über jeden Link durch einen gegebenen Knoten so gewählt wird, dass:

$$Q > (N + 1) \times p$$

wobei *N* + 1 die strikt maximale Distanz im Hinblick auf die Anzahl von Sprüngen bezeichnet, bis zu der ein Knoten Kenntnis über einen anderen Knoten in der Netzwerktopologie erwerben kann.

8. Kapazitätsteilungssystem nach Anspruch 1, **dadurch gekennzeichnet, dass** die Ablauffrist für einen gegebenen Link in *N* + 1 Werte diskretisiert und faktorisiert wird, wobei der Parameter *N* + 1 die strikt maximale Distanz im Hinblick auf die Anzahl von Sprüngen bezeichnet, bis zu der ein Knoten Kenntnis über einen anderen Knoten in der Netzwerktopologie erwerben kann, und dadurch, dass jeder Knoten *N* + 1 diskrete Sätze von Tripletts $\bar{E}_{ij}^{n}$ für einen Wert *n* erzeugen kann, der zwischen 0 und *N* liegt, zum Senden einer Steuernachricht und zum Einschließen der *N* + 1 diskreten Sätze von Tripletts $E_{ij}^{n}$ in die Steuernachricht, bevor sie gesendet wird, wobei die *N* + 1 diskreten Sätze von Tripletts $E_{ij}^{n}$ von lokal von dem Knoten gehaltenen Sätzen von Tripletts und von Topologieinformationen erzeugt werden.

9. Kapazitätsteilungssystem nach Anspruch 8, **dadurch gekennzeichnet, dass** das Diskretisierungsintervall von der folgenden Dauer $\Delta_n$ erhalten wird:

$$\forall n = 0, ..., N \ \Delta_n = \frac{n+1}{N+1} \times Q \ .$$

10. Kapazitätsteilungssystem nach einem der Ansprüche 8 und 9, **dadurch gekennzeichnet, dass** die Erzeugung einer Steuernachricht durch einen Knoten *i* auf einem Link (*i, j*) zu einer Zeit *t* für jeden Link (*i, l*) das Verlängern der Ablauffrist in Verbindung mit dem Link, der sich im Konflikt befindet, auf den Wert *t* + *Q* beinhaltet, wenn der im Konflikt stehende Link nicht gerade benutzt wird, und das Verkürzen der mit dem Link (*i, l*) assoziierten Ablauffrist auf den Wert *t* beinhaltet, wenn der Link gerade benutzt wird.

11. Kapazitätsteilungssystem nach einem der Ansprüche 8 und 9, **dadurch gekennzeichnet, dass** jeder Knoten ein Bloom-Filter benutzt, um die Sätze $E_{ij}^{0}, ..., E_{ij}^{N}$ in Verbindung mit einem gegebenen Link (i, *j*) zu präsentieren, wobei das Bloom-Filter eine Tabelle von *m* Bits und *k* Hash-Funktionen zum Assoziieren jedes Links mit *k* Schlüsseln beinhaltet, wobei die Schlüssel Positionen in der Tabelle entsprechen, und dadurch, dass das System das Bloom-Filter zum sicheren Ermitteln benutzt, ob ein Link in dem Satz $E_{ij}^{n}$ nicht enthalten ist.

12. Kapazitätsteilungssystem nach Anspruch 11, **dadurch gekennzeichnet, dass** der Empfang einer Steuernachricht, die die Sätze $E_{ij}^{0}, ..., E_{ij}^{N}$ auf einem Link (*i, j*) umfasst, über einen Knoten *j*, zu einer Zeit *t*, für jeden Link *(k, l)*, der mit dem Link (*i, j*) im Konflikt steht, wobei *k* sich von *i* unterscheidet und für jeden Wert von *n* zwischen 0 und *N*, Folgendes beinhaltet:

    - Verkürzen der Ablauffrist $N_{il}$ des Links (*k, l*) auf den Wert *t* + $\Delta_{n-1}$, wenn die Entfernung zwischen dem Knoten *i* und dem Knoten *k* strikt kürzer ist als die Entfernung zwischen Knoten *j* und Knoten *k* im Hinblick auf die Anzahl von Sprüngen,

    wenn der Link (*k, l*) in dem Satz $E_{ij}^{n}$ (604) enthalten ist;

    - Verlängern der Ablauffrist $N_{il}$ des Links (*k, l*) auf den Wert *t* + $\Delta_n$ (605),

    wenn der Link (*k, l*) nicht in dem Satz $E_{ij}^{n}$ (604) enthalten ist.

13. Kapazitätsteilungssystem nach einem der Ansprüche 11 und 12, **dadurch gekennzeichnet, dass** das Erzeugen einer Steuernachricht auf einem Link (*i, j*) zu einer Zeit *t* für jeden Link (*i, l*) Folgendes beinhaltet:

    - Verkürzen der Ablauffrist $N_{il}$ des Links (*i, l*) auf den Wert *t*, wenn der Link (*i, l*) gerade benutzt wird;
    - Verlängern der Ablauffrist $N_{il}$ des Links (*i, l*) auf den Wert *t* + *Q* (506), wenn der Link (*i, l*) gerade nicht benutzt wird.

14. Kapazitätsteilungssystem nach einem der Ansprüche 11 bis 13, **dadurch gekennzeichnet, dass** das Erzeugen einer Steuernachricht auf einem Link (*i, j*), zu einer Zeit *t,* für jeden Link *(k, l)*, der mit dem Link (*i, j*) im Konflikt steht, so dass *l* sich von *j* unterscheidet, und für jeden Wert von *n* zwischen 0 und *N,* das Einfügen des Links (*k, l*) in den Satz $E_{ij}^{n}$ (510) beinhaltet, wenn $N_{kl}$ strikt kürzer ist als $t + \Delta_n$.

**15.** Verfahren zum Aufteilen von Kapazität in einem Kommunikationsnetzwerk, das einen Satz von Knoten (10) umfasst, die sich gemeinsame Ressourcen teilen, wobei die Knoten paarweise über Kommunikationslinks (11) verbunden werden können, **dadurch gekennzeichnet, dass** es die folgenden Schritte beinhaltet:

- lokales Beibehalten, auf jedem Knoten, wenigstens eines Satzes von Tripletts (*k, l, $N_{kl}$*), der eine Ablauffrist $N_{kl}$ mit jedem Link (*k, l*) assoziiert, die die Zeit repräsentiert, bis zu der der assoziierte Link als unbenutzt angesehen werden kann;
- periodisches Senden, gemäß einer vordefinierten Periode *p*, von Steuernachrichten von jedem Knoten über einen Satz von gewählten Links, wobei jede über einen gegebenen Link von einem Knoten gesendete Steuernachricht die Elemente der Sätze von Tripletts umfasst, die lokal von dem Knoten beibehalten werden und die den Links entsprechen, die mit dem gegebenen Link im Konflikt stehen.

## Claims

**1.** A system (100) for sharing capacity in a communication network comprising a set of nodes (10) sharing common resources, the nodes being able to be pairwise connected via communication links (11), **characterised in that** each node is capable of locally maintaining at least one set of triplets (*k, l, $N_{kl}$*), which associates an expiry time $N_{kl}$ representing the time until which the associated link can be considered as unused with each link *(k, l),* and **in that** the nodes are configured to periodically exchange, according to a predefined period *p*, control messages over a set of links, each control message that is sent over a given link by a node comprising the sets of triplets which are locally maintained by said node and which correspond to the links that conflict with said given link.

**2.** The sharing system according to claim 1, **characterised in that** the sets that are locally maintained on each node comprise triplets related to the links adjacent to the node and to the links with which the adjacent links are conflicting.

**3.** The capacity sharing system according to claim 2, **characterised in that** each control message sent by a given node *i* over a link (*i, j*) comprises the elements of the sets of triplets that correspond to the links that conflict with the link (*i, j*).

**4.** The capacity sharing system according to any one of the preceding claims, **characterised in that** each node is capable of updating an expiry time associated with a given link in the set of triplets that it maintains in response to receiving a control message comprising a new value for the expiry time of said link that is later than its current value.

**5.** The capacity sharing system according to any one of the preceding claims, **characterised in that** each node is capable of updating the expiry times associated with its outgoing links in the set of triplets that it maintains prior to the transmission of a control message.

**6.** The capacity sharing system according to claim 5, **characterised in that**, for each outgoing link that is not used at the considered time *t*, the expiry time for this link is updated to the value *t + Q,* where *Q* represents a time interval during which the outgoing link is to be considered as unused by the other nodes.

**7.** The capacity sharing system according to claim 6, **characterised in that** said period *p* for transmitting control messages over each link by a given node is selected so that:

$$Q > (N + 1) \times p$$

where *N* + 1 designates the strictly maximum distance in terms of the number of hops up to which a node can acquire knowledge of another node in the network topology.

**8.** The capacity sharing system according to claim 1, **characterised in that** the expiry time for a given link is discretised and factorised into *N* + 1 values, with the parameter *N* + 1 designating the strictly maximum distance in terms of the number of hops up to which a node can acquire knowledge of another node in the network topology, and **in that** each node is capable of generating $N + 1$ sets of discrete triplets $E_{ij}^{n}$ for a value $n$ that is between 0 and $N$, for sending a control message and including said $N + 1$ discrete sets of triplets $E_{ij}^{n}$ in said control message before it is sent, said $N + 1$ discrete sets of triplets $E_{ij}^{n}$ being generated from the sets of triplets locally held by said node and from topology information.

9. The capacity sharing system according to claim 8, **characterised in that** the discretisation interval is obtained from the following duration $\Delta_n$:

$$\forall n = 0, \ldots, N \ \Delta_n = \frac{n+1}{N+1} \times Q \ .$$

10. The capacity sharing system according to any one of claims 8 and 9, **characterised in that** the generation of a control message by a node $i$ on a link $(i, j)$ comprises, at a time $t$, for any link $(i, l)$, the extension of the expiry time associated with said link in conflict to the value $t + Q$ if the conflicting link is not currently used, and reducing the expiry time associated with said link $(i, l)$ to the value $t$ if the link is currently used.

11. The capacity sharing system according to any one of claims 8 and 9, **characterised in that** each node uses a Bloom filter to show the sets $E_{ij}^{0}, \ldots, E_{ij}^{N}$ associated with a given link $(i, j)$, the Bloom filter comprising a table of $m$ bits and $k$ hash functions for associating each link with $k$ keys, the keys corresponding to positions in the table, and **in that** the system uses said Bloom filter to determine with certainty if a link is not contained in the set $E_{ij}^{n}$.

12. The capacity sharing system according to claim 11, **characterised in that** the reception of a control message comprising the sets $E_{ij}^{0}, \ldots, E_{ij}^{N}$ on a link $(i, j)$, via a node $j$, at a time $t$, comprises, for each link $(k, l)$ conflicting with said link $(i, j)$, where $k$ is distinct from $i$ and for any value of $n$ between 0 and $N$:

- reducing the expiry time $N_{kl}$ of the link $(k, l)$ to the value $t + \Delta_{n-1}$ if the distance between the node $i$ and the node $k$ is strictly shorter than the distance between the node $j$ and the node $k$ in terms of the number of hops if the link $(k, l)$ is in the set $E_{ij}^{n}$ (604);

- extending the expiry time $N_{kl}$ of the link $(k, l)$ to the value $t + \Delta_n$ (605) if the link $(k, l)$ is not in the set $E_{ij}^{n}$ (604).

13. The capacity sharing system according to any one of claims 11 and 12, **characterised in that** generating a control message on a link $(i, j)$, at a time $t$, for each link $(i, l)$ comprises:

- reducing the expiry time $N_{il}$ of the link $(i, l)$ to the value $t$ if the link $(i, l)$ is currently used;
- extending the expiry time $N_{il}$ of the link $(i, l)$ to the value $t + Q$ (506) if the link $(i, l)$ is not currently used.

14. The system for sharing capacity according to any one of claims 11 to 13, **characterised in that** generating a control message on a link $(i, j)$, at a time $t$, comprises, for each link $(k, l)$ in conflict with the link $(i, j)$, such that $l$ is distinct from $j$ and for any value of $n$ between 0 and $N$, inserting the link $(k, l)$ in the set $E_{ij}^{n}$ (510) if $N_{kl}$ is strictly shorter than $t + \Delta_n$.

15. A method for sharing capacity in a communication network comprising a set of nodes (10) sharing common resources, said nodes being able to be pairwise connected via communication links (11), **characterised in that** it comprises the following steps:

- locally maintaining, on each node, at least one set of triplets $(k, l, N_{kl})$, which associates an expiry time $N_{kl}$ representing the time up to which the associated link can be considered as unused with each link $(k, l)$;
- periodically sending, during a predefined period p, control messages from each node over a set of selected links, each control message sent over a given link by a node comprising the elements of the sets of triplets which are locally maintained by the node and which correspond to the links that conflict with said given link.

FIGURE 1

FIGURE 2A

$$E_a = \left\{ \begin{array}{l} (a,b,N_{ab}),(b,a,N_{ba}), \\ (b,c,N_{bc}),(c,b,N_{cb}), \\ (c,d,N_{cd}),(d,c,N_{dc}) \end{array} \right\} \quad \text{et} \quad E_b = \left\{ \begin{array}{l} (a,b,N_{ab}),(b,a,N_{ba}), \\ (b,c,N_{bc}),(c,b,N_{cb}), \\ (c,d,N_{cd}),(d,c,N_{dc}), \\ (d,e,N_{de}),(e,d,N_{ed}) \end{array} \right\}$$

FIGURE 2B

Message reçu sur le lien $(i,j)$ contenant $E_{ij}^0, ..., E_{ij}^N$ par le nœud $j$ à la date $t$ (300)

Pour tout lien $(k,l)$ en conflit avec le lien $(i,j)$ (301)

Nœud source $k$ est le nœud $j$ ? (302)  —  OUI

NON

pour tout $n \leftarrow 0, ..., N$ (303)

Lien $(k,l)$ inclus dans l'ensemble $E_{ij}^n$ ? (304)  —  NON  →  Étendre l'échéance $N_{kl}$ à la valeur $t + \Delta_n$ dans l'ensemble local $E_j$ (305)

OUI

$n = N$ ? (306)  —  NON  →  $n \leftarrow n + 1$ (307)

OUI

FIGURE 3

18

FIGURE 4

Message émis sur le lien $(i, j)$
par le nœud $i$ (500)

Pour tout lien $(k, l)$ en conflit
avec le lien $(i, j)$ (501)

Nœud source $k$
est le nœud $i$ ?
(502)

NON

Nœud source $k$
est le nœud $j$ ?
(507)

OUI

OUI

Lien $(k, l)$
couramment utilisé ?
(504)

NON

pour tout $n \leftarrow 0, \dots, N$
(508)

NON

$n \leftarrow n + 1$ (512)

NON

Etendre l'échéance
$N_{kl}$ à $t + Q$ (506)

Réduire
l'échéance $N_{kl}$ à $t$
(505)

OUI

$N_{kl} < t + \Delta_n$ ?
(509)

NON

$n = N$ ?
(511)

NON

OUI

OUI

Insérer $(k, l)$ dans
l'ensemble $E_{ij}^n$ (510)

FIGURE 5

20

Message reçu par le nœud $j$
sur le lien $(i,j)$
contenant $E_{ij}^0, \ldots, E_{ij}^N$ à la date $t$ (600)

Pour tout lien $(k,l)$ en conflit
avec le lien $(i,j)$ (601)

Nœud source $k$
est le nœud $j$ ?
(602)

OUI

NON

pour tout $n \leftarrow 0, \ldots, N$ (603)

$n \leftarrow n + 1$ (609)

Lien $(k,l)$
inclus dans
l'ensemble $E_{ij}^n$ ?
(604)

OUI

NON

Etendre l'échéance
$N_{kl}$ à la valeur
$t + \Delta_n$ (605)

Distance entre $i$ et $k$
$<$ Distance entre $j$ et $k$ ?
(606)

NON

OUI

Réduire l'échéance
$N_{kl}$ à la valeur :
$t + \Delta_{n-1}$ (607)

$n = N$ ?
(608)

NON

OUI

FIGURE 6

## EP 2 854 467 B1

**Documents brevets cités dans la description**

- US 20040114521 A